(19) Europäisches Patentamt
European Patent Office
Office européen des brevets

(11) **EP 4 667 307 A1**

(12) **EUROPEAN PATENT APPLICATION**

(43) Date of publication:
24.12.2025 Bulletin 2025/52

(21) Application number: 24182884.7

(22) Date of filing: 18.06.2024

(51) International Patent Classification (IPC):
**B60T 8/172** *(2006.01)*      **B60W 40/068** *(2012.01)*

(52) Cooperative Patent Classification (CPC):
**B60W 40/068; B60T 8/172;** B60T 2210/12;
B60W 2300/17; B60W 2552/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **JONASSON, Mats**
  **433 49 PARTILLE (SE)**

• **LAINE, Leo**
  **414 84 GÖTEBORG (SE)**
• **BRATTBERG, Björn**
  **644 33 TORSHÄLLA (SE)**
• **KUMRU, Murat**
  **413 06 GÖTEBORG (SE)**

(74) Representative: **Kransell & Wennborg KB**
**P.O. Box 2096**
**403 12 Göteborg (SE)**

Remarks:
Amended claims in accordance with Rule 137(2) EPC.

(54) **DETERMINATION OF SLIDING FRICTION FOR MACHINE/VEHICLE**

(57)    A method of estimating a sliding friction of a vehicle or machine (100) is provided, and includes pressing of at least one part (110) of the vehicle or machine against ground 120 with a first force ($F_b$); with the at least one part pressed against the ground, increasing a torque ($\tau_i$) applied to at least one wheel (130, 131) of the vehicle or machine, and determining a first torque as the applied torque required to make the at least one wheel, or a track of the vehicle or machine driven by the at least one wheel, start spinning; and estimating a sliding friction ($F_{si}$) of the at least one wheel, or of the track, relative ground based on the first force and the first torque. A corresponding computer system, vehicle or machine, computer program product and computer-readable storage medium are also provided.

Fig. 2D

EP 4 667 307 A1

## Description

### TECHNICAL FIELD

The disclosure relates generally to determination of sliding friction for machines/vehicles. In particular aspects, the disclosure relates to determination of sliding friction for a wheel loader or similar construction equipment. The disclosure can be applied to heavy-duty vehicles/construction equipment, among other vehicle types. Although the disclosure may be described with respect to a particular vehicle, the disclosure is not restricted to any particular vehicle.

### BACKGROUND

As part of vehicle motion management (VMM), it may often be desirable to estimate ground surface friction. Knowledge about ground friction (or at least sliding friction) may be useful for a controller responsible for controlling wheel force and/or slip, in order to for example avoid overspinning, reduce tire wear, and/or increase traction force.

Contemporary solutions for friction estimation include using a tire or tires of a vehicle as sensors. This does however often require that a large part of the tire contact patch is sliding, and not adhering, relative to ground. In practice, this may require that a considerable amount (such as for example 50% or more) of the maximum tire force is reached, a condition which is seldom obtained during normal operation of the vehicle. As a consequence, reliable friction estimates are not always readily available when they are needed the most, and may not always be delivered upon for example a request from the driver or other system of the vehicle. Even though it may be thinkable to suddenly accelerate the vehicle to reach for example 50% of max tire force, such motion of the vehicle may be undesirable and cause discomfort for the driver.

The present disclosure aims at providing a way of estimating at least ground sliding friction that at least partially mitigates some of the above-mentioned issues with contemporary technology, in particular for heavy-duty vehicles/construction equipment such as wheel loaders, tractors, excavators, bulldozers, road scrapers, and similar.

### SUMMARY

According to a first aspect of the present disclosure, there is provide a computer system including processing circuitry. The processing circuitry is configured to i) control a pressing of at least one part of a vehicle or machine against the ground with a first force; ii) with the at least one part being pressed against (or into) the ground with the first force, increase a torque applied to at least one wheel of the vehicle or machine, and determine a first torque as the applied torque required to make the at least one wheel, or a track of the vehicle or machine driven by the at least one wheel, start spinning; and iii) estimate a sliding friction of the at least one wheel, or of the track, relative ground based on the first force and the first torque. The first aspect of the disclosure may seek to solve the problem of how to estimate the sliding friction of a wheel relative to ground. A technical benefit may include that by using a lowerable/anchorable part of the vehicle (or machine) to anchor the vehicle to the ground, and by noting the torque required to make the wheel start spinning, the sliding friction may be estimated upon request from e.g. a driver of the vehicle, and in a way which is less discomfortable to the driver compared to e.g. trying to estimate the friction by suddenly accelerating the vehicle.

Optionally, in some examples, including in at least one preferred example, the processing circuitry may be configured to estimate the sliding friction as a ratio of the first torque to a product of a normal load and tire or wheel radius of the at least one wheel. A technical benefit may include that the sliding friction may thus be estimated based on rather easily obtainable parameters, as at least a nominal tire or wheel radius may be known from e.g. factory specifications or similar.

Optionally, in some examples, including in at least one preferred example, the processing circuitry may be further configured to, in response to the at least one wheel starting to spin, reduce or remove the torque applied to the at least one wheel. A technical benefit may include that this may reduce the stress on the components of the vehicle and/or reduce the discomfort felt by the driver.

Optionally, in some examples, including in at least one preferred example, the processing circuitry may be configured to detect that the torque applied to the at least one wheel exceeds, or is about to exceed, a predefined torque threshold, and to determine the first torque as that defined by the predefined torque threshold. A technical benefit may include that strain on the components of the vehicle can be reduced, in a situation wherein the vehicle is e.g. not capable of applying high enough torque to make the wheel spin, or similar.

Optionally, in some examples, including in at least one preferred example, the first force may be sufficient to make the vehicle or machine standing still. A technical benefit may include that the accuracy of the sliding friction as estimated can be improved, as less factors (such as due to the vehicle at least somewhat moving throughout the determination of the sliding friction) can be disregarded.

Optionally, in some examples, including in at least one preferred example, the processing circuitry may be further configured to obtain an indication of a ground surface type, and to estimate peak friction (between e.g. the at least one wheel and the ground) based on the estimated sliding friction and ground surface type using a lookup table. A technical benefit may include that peak friction can thus be estimated from statistical data, e.g. as found by performing controlled experiments for a plurality of surface ground types and of how peak and sliding friction relate for each such ground type. Knowing the peak friction may be beneficial as part of e.g. controlling wheel slip or similar.

Optionally, in some examples, including in at least one preferred example, the indication of the ground surface type may be obtained based on one or more images of the ground captured by one or more cameras of the vehicle or machine. A technical benefit may include that the peak friction may thus be estimated for a plurality of different ground types, without having to assume that the ground on which the vehicle drives is always of a same nominal type.

Optionally, in some examples, including in at least one preferred example, the processing circuitry may be further configured to use the pressing of the at least one part (into the ground) to reduce a normal load of the at least one wheel. A technical benefit may include that the at least one wheel may thus start to spin at a lower torque, which may reduce the stress put on the at least one wheel and the part of the drivetrain responsible for driving the at least one wheel. This because the sliding friction is estimated based on both the applied force and the applied torque.

Optionally, in some examples, including in at least one preferred example, the at least one part may be any one of a bucket, dozer blade, plow blade, grader blade and hopper, or any other arrangement that may be lowered to and pressed into the ground with a controllable force and thus serves to (at least partially) anchor the vehicle as part of the sliding friction determination. A technical benefit may include that the envisaged solution can apply to multiple different types of vehicles with multiple different lowerable parts.

Optionally, in some examples, including in at least one preferred example, the processing circuitry may be further configured to obtain a friction probe request from a driver or system of the vehicle or machine, and to perform operations i), ii) and iii) in response to receiving such a request. A technical benefit may include that the sliding friction estimation can thus be performed on-demand, when a request for such friction estimation arrives from e.g. the driver.

Optionally, in some examples, including in at least one preferred example, the processing circuitry may be further configured to perform operation iii) in response to determining that operation i) or operations i) and ii) is/are already performed as part of another operation (e.g. part of a utility task/productive activity) of the vehicle or machine. A technical benefit may include that the estimation of the sliding friction can thus be performed as part of the normal operation of the vehicle/machine, without the driver having to explicitly provide instructions therefor. For example, a wheel loader may have its bucket pressed into the ground as part of picking up material from a pile, and there may be sufficient torque applied on the wheels to make the wheels spin already as part of an attempt of trying to shove the bucket further into the pile.

Optionally, in some examples, including in at least one preferred example, the processing circuitry may be configured to perform operation i) in response to obtaining a signal indicating that the vehicle or machine is standing still (e.g. is stationary). A technical benefit may include that the stress put on the various components of the vehicle/machine may thus be reduced, as lowering of the part into the ground will not suddenly cause a halt of a moving vehicle, or similar. This may further enhance the comfort of the driver, by avoiding such sudden halts.

Optionally, in some examples, including in at least one preferred example, the signal indicating that the vehicle or machine is standing still may be obtained from at least one radar of the vehicle or machine. A technical benefit may include that the signal may thus be accurate even if e.g. one or more wheels of the vehicle/machine are spinning, which would provide a false indication of movement of the vehicle if e.g. using the rotational speed of a wheel and/or drive axle as an indication of whether the vehicle is standing still or not.

According to a second aspect of the present disclosure, there is provided a vehicle or machine including the computer system of the first aspect (or any example thereof disclosed herein). The second aspect may seek to solve the problem of how to provide a vehicle or machine that is capable of estimating the sliding friction.

As generally envisaged herein, the at least one wheel of the vehicle or machine may be e.g. a normal wheel that comes into contact with the ground. In other examples, the at least one wheel may instead be e.g. a drive wheel of a track of the vehicle/machine in case the vehicle/machine has one or more such tracks, such as a track of a tracked excavator, a bulldozer or similar. In such a case, the sliding friction will not be that between the wheel and the ground, but instead that between the track and the ground.

As further envisaged herein, a "machine" may refer to a type of vehicle that is mainly not supposed to be driven on normal roads and/or which is mainly constructed to be used as a working tool and/or to move goods over shorter distances. There may, for example, in some legal jurisdictions be different rules applying to vehicles mainly supposed to be driven on normal roads (such as trucks) and vehicles mainly supposed to be driven off-road and used as working equipment (such as excavators, wheel loaders, and similar).

Optionally, in some examples, including in at least one preferred example, the vehicle or machine may be a wheel loader and the at least one part may be a bucket. A technical benefit may include that a bucket may be particularly useful as an anchor of the wheel loader.

Optionally, in some examples, including in at least one preferred example, the vehicle or machine may be any one of a bulldozer, grader, planer, plow, tractor, excavator, (snow) groomer or any other vehicle that has a part that may be lowered and pressed into the ground with a controllable (and known) forced. A technical benefit may include that the envisaged solution may thus be applicable to a wide variety of different vehicles.

According to a third aspect of the present disclosure, there is provided a computer-implemented method. The method includes i) controlling, by processing circuitry of a computer system (such as that of the first aspect), a pressing of at least one part of a vehicle or machine against (or into) the ground with a first force; ii) with the at least one part being pressed against the ground with the first force, increasing (by the processing circuitry) a torque applied to at least one wheel of the vehicle or machine, and determining a first torque as the applied torque required to make the at least one wheel, or a track of the vehicle or machine driven by the at least one wheel, to start spinning; and iii) estimating (by the processing circuitry) a sliding friction of the at least one wheel, or of the track, relative ground based on the first force and the first torque. The third aspect may seek to solve the same problem as the computer system of the first aspect, namely how to estimate sliding friction with less discomfort to the driver, possibly on-demand, and with less stress on the components of the vehicle or machine.

According to a fourth aspect of the present disclosure, there is provided a computer program product including program code for performing, when executed by the processing circuitry, the method of the third aspect. The computer program product may for example include a computer-readable storage medium on which the program code is stored. The storage medium may be non-transitory.

According to a fifth aspect of the present disclosure, there is provided a computer-readable storage medium including instructions that, when executed by the processing circuitry, cause the processing circuitry to perform the method of the third aspect. The storage medium may be non-transitory.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** schematically illustrates an example machine/vehicle in form of a wheel loader, according to an example.

**FIGS. 2A, 2B, 2C** and **2D** schematically illustrates the operation of the wheel loader of FIG. 1 as part of performing an example method of estimating sliding friction as envisaged herein, according to various examples.

**FIG. 3** schematically illustrates examples of a method for estimating sliding friction as envisaged herein, according to various examples.

**FIG. 4** schematically illustrates examples of a computer system for estimating sliding friction as envisaged herein, according to various examples.

**FIG. 5** schematically illustrates an another example machine/vehicle in form of a road scraper, according to one example.

**FIG. 6** is a schematic diagram of an example computer system for implementing examples disclosed herein, according to an example.

## DETAILED DESCRIPTION

The detailed description set forth below provides information and examples of the disclosed technology with sufficient detail to enable those skilled in the art to practice the disclosure.

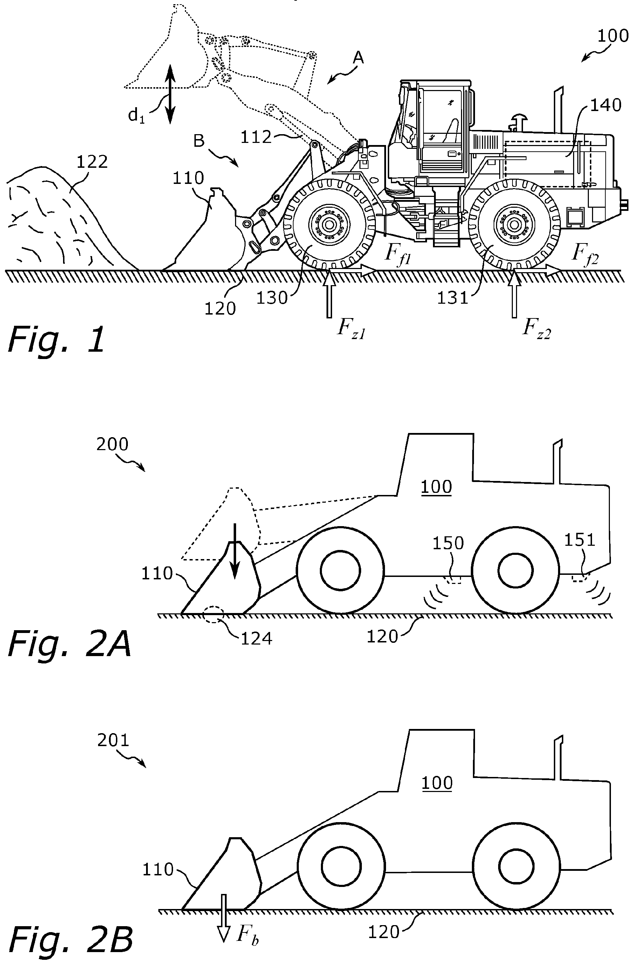

**FIG. 1** schematically illustrates an example vehicle/machine as envisaged herein, in the form of a wheel loader 100. The wheel loader 100 includes at least one part that may be pressed against the ground 120 in a controlled way, here in form of a bucket 110. The bucket is movable up and down (as indicated by the arrow 114) using one or more hydraulic cylinders 112, and a force with which the bucket is for example pressed against the ground 120 may be controlled and known. As used herein, the term "ground" does not necessarily corresponding to an outdoor surface, but may also include any drivable surface or substrate, even as found indoors. For example, a "ground" may be a field of grass, dirt, clay, tarmac, gravel, a road, a floor, a slab of concrete, or any other surface on which wheel loader (or other vehicle/machine) may drive and for which there is a desire to estimate sliding friction.

The bucket 110 may for example be operated between different positions, such between a position A in which the bucket 110 is lifted above the ground 120, and a position B in which the bucket 110 is in contact with the ground 120. When in position B, the bucket 110 may be further pressed against the ground with a known force, using the one or more hydraulic cylinders 112.

The wheel loader 100 in this example further has four wheels, of which only the front and rear wheels 130 and 131 on its left side are shown. Although not explicitly shown, it is further assumed that the wheel loader 100 has one or more engines for generating propulsion, i.e. for applying torque to at least one of the wheels 130 and 131, either directly to the wheels themselves or to e.g. one or more axles on which the wheels 130 and 131 are mounted. The wheel loader 100 may for example include a front wheel axle on which the wheel 130 is mounted, and a rear wheel axle on which the wheel 131 is mounted. The wheel loader 100 may for example have an internal combustion engine for providing torque to one or more of the front and rear wheel axles (via e.g. one or more differentials), via one or more gearboxes and similar as required, or the one or more engines may be electrical machines in case the wheel loader 100 is fully or hybrid electric. In some examples, torque may instead be applied on one or more of the wheels 130 and 131 and/or wheel axles using hydraulics, in which case the engine may instead be responsible for powering one or more hydraulic pumps, or similar. In any way, for the purpose of the solution as envisaged herein, it is sufficient that the vehicle or machine (e.g. the wheel loader 100) has at least some way of applying torque to at least one of its wheels in some controlled way, such that the applied torque is known.

By controlling the applied torque at the wheels 130 and/or 131 and the lowering/raising of the bucket 110, the wheel loader 100 may be used to e.g. pick up material from a pile 122 of for example sand, gravel, dirt, or similar. The bucket 110 may be raised/lowered based on the movement of one or more control sticks inside a cabin of the wheel loader 100, and the torque applied to the wheels 130 and/or 131 may be controlled based on the position of one or more pedals in the cabin, or similarly. A system responsible for controlling the bucket 110, such as for controlling the one or more hydraulic cylinders 112, may further be configured to for example, based on feedback from the hydraulic cylinders 112 and/or one or more sensors, estimate a current loading of the bucket 110 and/or a total weight of the wheel loader 100, and similar.

Due to the own weight, and loading of, the wheel loader 100, there is a resulting normal wheel force $F_{z1}$ and $F_{z2}$ at each of the wheel 130 and 131, respectively, as illustrated in FIG. 1. There are also corresponding friction forces $F_{f1}$ and $F_{f2}$, which are here assumed to illustrate the overall contributions from both static friction, rolling friction and sliding friction.

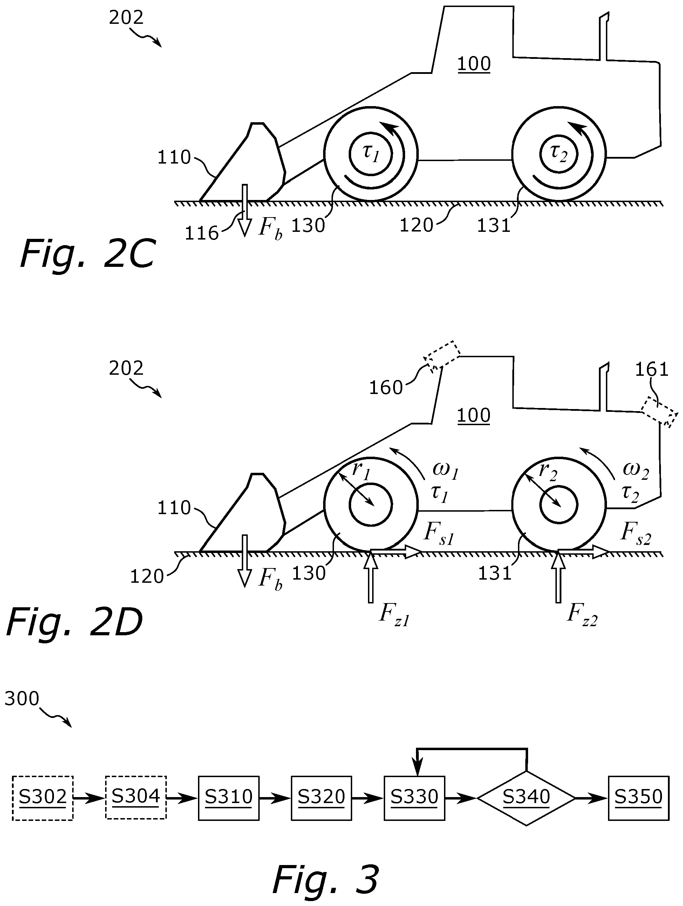

How the present disclosure envisages to estimate sliding friction between a wheel and the ground 120 will now be described in more detail with reference also to FIGS. 2A, 2B, 2C, 2D and 3.

**FIGS. 2A** to **2D** schematically illustrate various states in which the vehicle or machine may be in while performing a method for estimating sliding friction as envisaged herein, while **FIG. 3** schematically illustrates a flowchart of examples of such a method 300.

In a state 200 as illustrated in FIG. 2A, and e.g. as part of an operation S310 of the method 300, the bucket 110 is lowered such that it makes contact with the ground 120, i.e. at least at a point 124 between the bucket 110 and the ground 120.

In a state 201 as illustrated in FIG. 2B, and e.g.

as part of an operation S320 of the method 300, the bucket 110 is pressed against the ground 120 with a first, known force $F_b$.

Optionally, in some examples, operation S320, or operations S310 and S320, may be performed only in response to receiving, e.g. as part of an optional operation S304 of the method 300, an indication that the wheel loader 100 is currently standing still, in order to e.g. avoid causing an abrupt halt of the wheel loader 100. For this purpose, the wheel loader 100 may be equipped with one or more radars 150 and 151 that are aimed at the ground 120 and configure to determine, or at least output a signal based on which it may be determined, a true ground speed of the wheel loader 100, i.e. based on how the body of the wheel loader 100 moves relative the ground 120 and not based on e.g. whether or how fast one or more wheels of the wheel loader 100 are spinning.

In a state 202 as illustrated in FIG. 2C in which the bucket 110 is being pressed against the ground 120 with the first force $F_b$, and e.g. as part of an operation S330 of the method 300, a torque $\tau_i$ (such as $\tau_1$ for the wheel 130 and/or a torque $\tau_2$ for the wheel 131) applied at the at least one wheel of the wheel loader 100 is increased, for example by instructing a control system for controlling how much torque that is applied at the wheels to increase the torque accordingly.

The applied torque $\tau_i$ is increased until the wheel loader 100 transitions into a state 203 as illustrated in FIG. 2D, wherein the at least one wheel starts spinning. As part of e.g. an operation S340 of the method 300, it can be checked whether the at least one wheel is spinning at a currently applied torque $\tau_i$, e.g. by determining (using any suitable sensor) whether a rotational speed $\omega_i$ of the at least one wheel on which the torque $\tau_i$ is applied is non-zero or not. If the wheel is not spinning, the flow of the method 300 may include going back to operation S330 to further increase the torque $\tau_i$. If the wheel is determined to be spinning, it is noted (e.g. as part of operation S340) what the applied torque $\tau_i$ is, to define a first torque $\tilde{\tau}_i$ as the value of $\tau_i$ at which the at least one wheel starts (or started) spinning.

For example, if gradually increasing the torque $\tau_1$ on the wheel 130, the first torque $\tilde{\tau}_1$ may be defined as the value of $\tau_1$ when $\omega_1$ goes from being zero to $\omega_1 > 0$, and similarly for the wheel 131 or some other wheel of the wheel loader 100. The rotational speed $\omega_i$ of a wheel may be measured using one or more suitable sensors, such as mounted on the corresponding wheel axle or similar.

Once the value of the first torque $\tilde{\tau}_i$ has been determined, the procedure may continue to estimate, as part of e.g. an operation S350 of the method 300, a sliding friction (coefficient) $\mu_{si}$ for the at least one wheel (such as $\mu_{s1}$ for the wheel 130 and $\mu_{s2}$ for the wheel 131, and similar) relative ground 120, based on the first force $F_b$ and the first torque $\tilde{\tau}_i$.

For example, based on knowledge about a normal load $F_{zi}$ at the at least one wheel (such as $F_{z1}$ for the wheel 130, and $F_{z2}$ for the wheel 131, etc.) and a

wheel radius $r_i$ of the at least one wheel (such as $r_1$ for the wheel 130, and $r_2$ for the wheel 131, etc.), the sliding friction (coefficient) $\mu_{si}$ may be estimated as at least proportional to a ratio of the first torque to a product of the normal load and tire (or wheel) radius, e.g. such as

$$\mu_{si} \propto \frac{\tilde{\tau}_i}{F_{zi} r_i}.$$

The sliding friction force $F_{si}$ at the at least one wheel may be defined as $F_{si} \propto \mu_{si} F_{zi}$.

In some examples, the wheel loader 100 may be equipped with one or more cameras 160 and 161 configured to capture images of the ground 120, and the wheel loader 100 may be configured to, based on these images, estimate a ground surface type (such as tarmac/asphalt, clay, mud, sand, dirt, gravel, snow, ice, etc.). In other examples, the current ground surface type can be estimated using other means, such as based on geographical data and a current location (such as obtained using e.g. the Global Positioning System, GPS, or other equivalents). In yet other examples, it is envisaged that an indication of the ground surface type may be entered manually by a driver of the wheel loader 100, or similar.

A lookup table may be provided in which corresponding (estimated) peak friction (coefficient) values $\mu_{pi}$ are provided for different values of sliding friction $\mu_{si}$ and for different ground surface types. For an indicated ground surface type and estimated sliding friction, a value of the peak friction may then be derived from such a table. If there are no exactly matching values in the table, interpolation and/or extrapolation may be used to estimate e.g. the peak friction for an estimated sliding friction based on one or to nearby values of sliding friction that are provide in the table.

In some examples, in response to determining (e.g. as part of operation S340) that the at least one wheel has started to spin, the applied torque $\tau_i$ at the at least one wheel can be reduced or even removed, in order to for example reduce stresses on the various components of the wheel loader 100, such as the tires, transmission, wheel axles, gearboxes/transmission, and similar. This because once the at least one wheel has started to spin, there is no longer a need to keep or even increase further the applied torque $\tau_i$.

In some examples, the wheel loader 100 may use the pressing of the bucket 110 against/into the ground 120 to reduce the normal load $F_{zi}$ of the at least one wheel, which may allow to make the at least one wheel spin at a lower applied torque $\tau_i$ than otherwise, as less weight is thus put on the at least one wheel. This may reduce the stress put on the various components of the wheel loader 100 while still allowing to estimate the sliding friction.

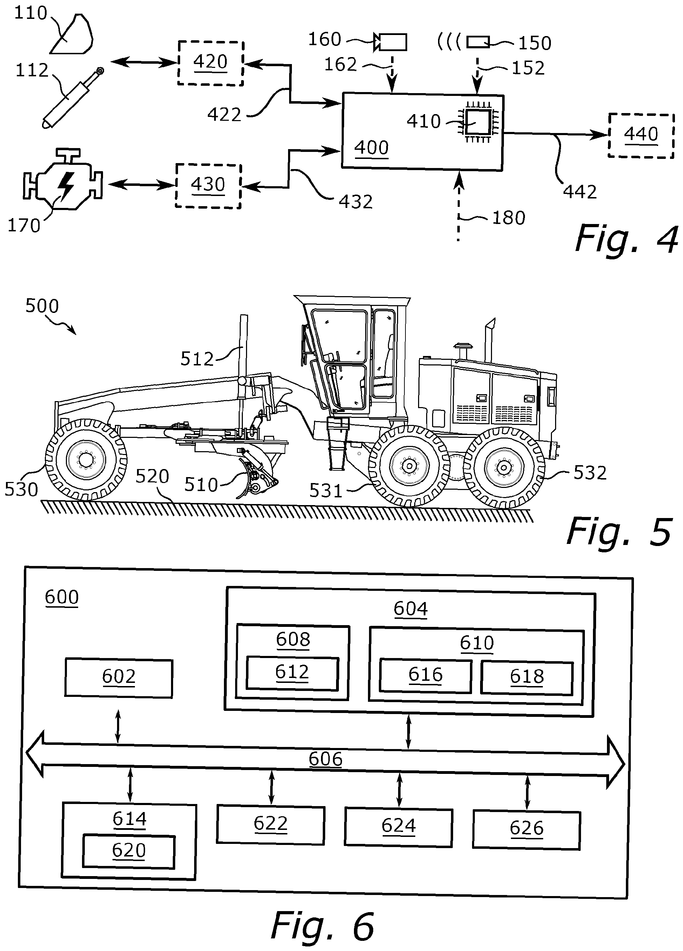

FIG. 4 schematically illustrates a functional diagram of one or more examples of a computer system 400 as envisaged herein, as well as how such a computer system 400 may interact with various other components/entities of the vehicle/machine. The computer system 400 includes processing circuitry 410 that is configured to perform the method 300 as described herein by interacting with the other components/entities of the vehicle/machine.

Using the wheel loader 100 as an example of such a vehicle/machine, the processing circuitry 410 is configured to control the lowering of the bucket 110, by controlling the one or more hydraulic cylinders 112 to lower the bucket 110 to the ground 120 and then press the bucket 110 against the ground 120 with the known force $F_b$. The processing circuitry 410 may for example be configured to communicate (by exchanging one or more signals 422) with a hydraulics controller 420 configured to operate the one or more hydraulic cylinders 112 in accordance with requested forces and similar.

The processing circuitry 410 is further configured to control the application of torque at the at least one wheel of the wheel loader 100, i.e. to cause the torque $\tau_i$ being applied at the at least one wheel. The processing circuitry 410 may for example be configured to communicate (by exchanging one or more signals 432) with a torque controller 430 configured to control how much torque that is applied to the at least one wheel, e.g. by controlling an engine 170 and/or transmission (not shown) of the wheel loader 100. As envisaged herein, there may of course be other possibilities of the processing circuitry 410 being able to cause the force $F_b$ and the torque $\tau_i$ being applied. For example, there may in some examples be a single interface/controller responsible for controlling both the engine 170, transmission, hydraulic cylinders 112, and similar, in which case the processing circuitry 410 need only communicate with this single interface for these purposes. In other examples, the processing circuitry 410 and computer system 400 may be configured to on their own provide such control of the engine 170, transmission, hydraulic cylinders 112, and similar.

The processing circuitry 410 may be further configured to obtain an indication of a normal load of the at least one wheel, e.g. from an onboard weight determine system, or similar. The total weight of the wheel loader 100 may for example be obtained based on factory specifications, in addition with information about a current loading of the bucket 110, that may be obtained e.g. based on various sensors and/or based on feedback from the hydraulic cylinders 112.

In some examples, the processing circuitry 410 may be configured to communicate (e.g. by receiving signals 152) with at least one radar unit 150 of the wheel loader 100, to receive an indication about a true ground speed of the wheel loader 100 as described herein. For example, as part of the operation S304 of the method 300, the processing circuitry 410 may receive a signal 152 indicating that the wheel loader 100 is currently standing still, and only then proceed with the various operations of pressing the bucket 110 into ground, increasing the torque, etc. to determine the sliding friction. In this example, if the signal 152 instead indicates that the wheel loader 100 is not standing still, the processing circuitry 410 may refrain from performing the procedure of sliding friction estimation. Using a radar sensor is beneficial in that it can generate an indication of the true ground speed even if one or more wheels of the wheel loader 100 are spinning.

In some examples, the processing circuitry 410 may be configured to communicate (e.g. by receiving signals 162) with the at least one camera 160 of the wheel loader 100 to receive images of the ground, and to determine the ground surface type based thereon as previously described herein, and e.g. use a lookup table (that may be stored for example in an internal memory of the computer system 400) and/or be accessible from an external source (not shown) such as a remote database, a cloud service, or from some other memory with which the computer system 400 may communicate either by wire or wirelessly.

In some examples, the processing circuitry 410 may be configured to receive a signal 180 indicating that a driver of the wheel loader 100 wants to perform the procedure for sliding friction estimation, e.g. in response to the driver pressing a button on a control panel of the wheel loader 100, pulling a lever, pressing a pedal, selecting a particular menu option, or by any other suitable means for generating the signal 180. For example, as part of an operation S302 of the method 300, the processing circuitry 410 may be configured to check whether such a signal 180 is received, and to perform e.g. the operations S310, S320, S330, S340 and S350 in response to receiving such a signal 180. Consequently, as envisaged herein, estimating the sliding friction can be performed "on-demand".

In some examples, as part of e.g. operation S302, the processing circuitry 410 may be configured to determine that a current operation of the wheel loader 100 has already resulted in the performing of e.g. operations S310, S320, S330 and that (as confirmed in e.g. operation S340) the at least one wheel is therefore already spinning. The processing circuitry 410 may then note the torque at which the wheel started to spin (i.e. the first torque $\tilde{\tau}_i$) and then proceed to estimate the sliding friction. For example, the bucket 110 may already have been lowered and pressed against the ground 120 as part of the driver wanting to shove the bucket into the pile 122, and sufficient torque may already have been applied by the driver to cause a wheel to start spinning, due to e.g. a heaviness or density of the material in the pile 122, and similar. Phrased differently, in some examples, estimation of sliding friction may be perform when a suitable occasion occurs, and not necessarily on demand. In yet other examples, the driver may provide an indication that sliding friction should be estimated when possible, or e.g. that sliding friction should only be estimated on demand.

In some examples, it is envisaged that the procedure may be fully automated, i.e. that the driver may start the procedure by e.g. pressing of a button, and that the wheel loader 100 and computer system 400 will then on its own perform the various operations resulting in the determination (operation S350) of the sliding friction. In other envisaged examples, the procedure may require further input from the driver. For example, the processing circuitry 410 may instruct the driver (via e.g. audio signals, visual cues/signals, such as presented on a display) to manually perform the various operations, such as lowering the bucket 110, continue to press the bucket 110 into the ground 120, apply torque $\tau_i$ by for example pressing on a throttle pedal, and similar. In yet other examples, only some of the operations may be performed by the driver, such as e.g. pressing on the throttle pedal to increase the torque $\tau_i$ but not the lowering and pressing of the bucket 110 against the ground 120, and similar.

After the sliding friction $\mu_{si}$ is determined/estimated, the processing circuitry 410 may in some examples be configured to communicate the estimated value of $\mu_{si}$ (by e.g. sending of a signal 442) to some other subsystem 440 of the wheel loader 100 that is (or may be) interested in such a value. The subsystem 440 may for example be a system responsible for controlling wheel slip, for controlling braking, and similar, of the wheel loader 100, and which may require knowledge about the sliding (or peak) friction in order to operate as intended.

As at least partially mentioned earlier herein, in some examples, one or more, or all, of the controllers and/or subsystems 420, 430 and 440 may form part of the computer system 400 or form part of a larger system in which the computer system 400 is also included. Phrased differently, the functional diagram of FIG. 4 is only one example, and the various functional blocks/modules may be combined and/or separated as desirable as long as the intended overall functionality is still obtained, i.e. as long as the method 300 is still performable.

FIG. 5 schematically illustrates another example vehicle/machine in form of a road grader 500, serving to illustrate that the envisaged procedure for estimating sliding friction can be applied also for other vehicles/machines than wheel loaders. The road grader 500 may for example be used to even out a ground surface, to plow snow, and similar. For this purpose, the road grader 500 includes a part that is lowerable and pressable against the ground 520, namely a blade 510 that is operable up and down using one or more hydraulic cylinders 512. The road grader 500 has front wheels (of which a wheel 530 is shown), and two sets of rear wheels (of which a first rear wheel 531 and a second rear wheel 532 are shown), and torque can be applied on at least one of these wheels. Thus, the road grader 500 can, similarly to the wheel loader 100, be anchored to the ground 520 by lowering and pressing the blade 510 against the ground 520, and wheel torque can be increased until a wheel starts to spin, the torque required to make the wheel spin can be noted, and the sliding friction can be estimated as described herein, based on e.g. knowledge about with what force the blade 510 is pressed against the ground 520, the wheel torque, a radius of the wheel/tire, and similar.

In general, the present disclosure envisages to provide any type of vehicle (or machine) with at least one part that can be used to anchor the vehicle to the ground, and where torque can be applied to at least one wheel. The envisaged vehicle (or machine) includes the computer system 400, and is configured to estimate sliding friction as described herein. The vehicle/machine may be e.g. a wheel loader and the at least one part may be a bucket, as already illustrated. In other examples, the vehicle/machine may be e.g. a bulldozer, grader, planer, plow, tractor, excavator, snow groomer, and similar, and the at least one part may be a bucket, dozer blade, ripper, plow blade, grader blade, plane, hopper, surface finishing attachment, or similar arrangement where a controllable mechanical device is able to anchor the vehicle/machine to the ground.

If the vehicle/machine is a tracked vehicle, such as a bulldozer, groomer, or similar, it is understood that instead of the wheel spinning, it is noted when the track (which is driven by the wheel) starts to slide/skid relative to ground, and that the sliding friction is estimated based on the applied torque, the force at which the anchoring part is pressed against ground, and taking into account that the vehicle has tracks instead of wheels in contact with the ground. There may of course be vehicles that have both tracks and wheels in contact with the ground, for which it is assumed that either at least one wheel, at least one track or both of at least one wheel and track is/are used for the purpose stated herein.

**FIG. 6** is a schematic diagram of a computer system 600 for implementing examples disclosed herein. The computer system 600 (which may e.g. be or implement the computer system 400) is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include nonvolatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In summary of all of the above, the present disclosure presents a way of estimating sliding friction using a movable part of a vehicle/machine, in which the movable part is lowered to anchor the vehicle/machine to ground, and where increasing the torque applied on at least one wheel until the wheel starts to spin is used to provide an estimate of the sliding friction. This provides a solution in which a sliding friction estimate may be obtained on demand and/or as part of normal operation of the vehicle/machine, and with little or no discomfort to the driver as e.g. sudden accelerations are avoided.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is an exemplifying list of examples envisaged herein:

Example 1: A computer system including processing circuitry configured to: i) control a pressing of at least one part of a vehicle or machine against ground with a first force; ii) with the at least one part being pressed against ground with the first force, increase a torque applied to at least one wheel of the vehicle or machine, and determine a first torque as the applied torque required to make the at least one wheel, or a track of the vehicle or machine driven by the at least one wheel, start spinning; iii) estimate a sliding friction of the at least one wheel, or of the track, relative ground based on the first force and the first torque.

Example 2: The system of example 1, wherein the processing circuitry is configured to estimate the sliding friction as a ratio of the first torque to a product of a normal load and tire or wheel radius of the at least one wheel.

Example 3: The system of example 1 or 2, wherein the processing circuitry is further configured to, in response to the at least one wheel starting to spin, reduce or remove the torque applied to the at least one wheel.

Example 4: The system of any one of examples 1 to 3, wherein the first force is sufficient to make the vehicle or machine standing still.

Example 5: The system of any one of the preceding examples, wherein the processing circuitry is further configured to obtain an indication of a ground surface type, and to estimate peak friction based on the estimated sliding friction and ground surface type using a lookup table.

Example 6: The system of any one of the preceding examples, wherein the indication of the ground surface type is obtained based on one or more images of the ground captured by one or more cameras of the vehicle or machine.

Example 7: The system of any of the preceding examples, wherein the processing circuitry is further configured to use the pressing of the at least one part to reduce a normal load of the at least one wheel.

Example 8: The system of any one of the preceding examples, wherein the at least one part is any one of a bucket, dozer blade, ripper, plow blade, grader blade, plane, and hopper .

Example 9: The system of any one of the preceding examples, wherein the processing circuitry is further configured to obtain a friction probe request from a driver or system of the vehicle or machine, and to perform operations i), ii) and iii) in response to receiving said request.

Example 10: The system of any one of the preceding examples, wherein the processing circuitry is further configured to perform operation iii) in response to determining that operation i) or operations i) and ii) is/are already performed as part of another operation of the vehicle or machine.

Example 11: The system of any one of the preceding examples, wherein the processing circuitry is further configured to perform operation i) in response to obtaining a signal indicating that the vehicle or machine is standing still.

Example 12: The system of example 11, wherein the signal indicating that the vehicle or machine is standing still is obtained from at least one radar of the vehicle or machine.

Example 13: The system of any one of the previous examples, wherein the processing circuitry is configured to detect that the torque applied to the at least one wheel exceeds, or is about to exceed, a predefined torque threshold, and to determine the first torque as that defined by the predefined torque threshold.

Example 14: A vehicle or machine including the computer system of any of examples 1-13.

Example 15: The vehicle or machine of example 14, wherein the vehicle or machine is a wheel loader and the at least one part is a bucket.

Example 16: The vehicle or machine of example 14, wherein the vehicle or machine is any one of a bulldozer, grader, planer, plow, tractor, excavator, groomer.

Example 17: A computer-implemented method, including: i) controlling of a computer system of a vehicle or machine against ground with a first force; ii) with the at least one part being pressed against ground with the first force, increasing applied to at least one wheel of the vehicle or machine, and determining a first torque as the applied torque required to either a) make the at least one wheel start spinning or b) make the applied torque reach a torque threshold; iii) estimating of the at least one wheel relative ground based on the first force and the first torque.

Example 18: A computer program product including program code for performing, when executed by the processing circuitry, the method of example 17.

Example 19: A non-transitory computer-readable storage medium including instructions which, when executed by the processing circuitry, cause the processing circuitry to perform the method of example 17.

**Claims**

1. A computer system (400) comprising processing circuitry (410) configured to:

   i) control a pressing of at least one part (110) of a vehicle or machine (100) against ground (120) with a first force (116, $F_b$);
   ii) with the at least one part being pressed against ground with the first force, increase a torque (136, 137, $\tau_i$) applied to at least one wheel (130, 131) of the vehicle or machine, and determine a first torque ($\tilde{\tau}_i$) as the applied torque required to make the at least one wheel, or a track of the vehicle or machine driven by the at least one wheel, start spinning;
   iii) estimate a sliding friction ($\mu_{si}$) of the at least one wheel, or of the track, relative to ground based on the first force and the first torque.

2. The system of claim 1, wherein the processing circuitry is configured to estimate the sliding friction as a ratio of the first torque to a product of a normal load and tire or wheel radius of the at least one wheel ($\mu_{si} \propto \tilde{\tau}_i/(F_{zi}r_i)$).

3. The system of claim 1 or 2, wherein the processing circuitry is further configured to, in response to the at least one wheel starting to spin, reduce or remove the torque applied to the at least one wheel.

4. The system of any one of the preceding claims, wherein the processing circuitry is further configured to obtain an indication of a ground surface type, and to estimate peak friction ($\mu_{pi}$) based on the estimated sliding friction and ground surface type using a lookup table.

5. The system of any one of the preceding claims, wherein the indication of the ground surface type is obtained based on one or more images of the ground captured by one or more cameras (160, 162) of the vehicle or machine.

6. The system of any of the preceding claims, wherein the processing circuitry is further configured to use the pressing of the at least one part to reduce a normal load ($F_{zi}$) of the at least one wheel.

7. The system of any one of the preceding claims, wherein the processing circuitry is further configured to obtain a friction probe request (180) from a driver or system of the vehicle or machine, and to perform operations i), ii) and iii) in response to receiving said request.

8. The system of any one of the preceding claims, wherein the processing circuitry is further configured to perform operation iii) in response to determining that operation i) or operations i) and ii) is/are already performed as part of another operation of the vehicle or machine.

9. The system of any one of the preceding claims, wherein the processing circuitry is further configured to perform operation i) in response to obtaining a signal (162) indicating that the vehicle or machine is standing still.

10. The system of claim 9, wherein the signal indicating that the vehicle or machine is standing still is obtained from at least one radar (160) of the vehicle or machine.

11. A vehicle or machine (100) comprising the computer system of any of claims 1-10.

12. The vehicle or machine of claim 11, wherein the vehicle or machine is a wheel loader and the at least one part is a bucket (110).

13. The vehicle or machine of claim 11, wherein the vehicle or machine is any one of a bulldozer, grader, planer, plow, tractor, excavator, groomer, and wherein the at least one part is any one of a bucket (110), dozer blade, ripper, plow blade, grader blade, plane, and hopper.

14. A computer-implemented method (300), comprising:

   i) controlling (S310, S320), by processing circuitry (410) of a computer system (400), a pressing of at least one part (110) of a vehicle or machine (100) against ground (120) with a first force ($F_b$);
   ii) with the at least one part being pressed against ground with the first force, increasing (S330), by said processing circuitry, a torque ($\tau_i$) applied to at least one wheel (130, 131) of the vehicle or machine, and determining (S340) a first torque ($\tilde{\tau}_i$) as the applied torque required to make the at least one wheel start spinning;

iii) estimating (S3 50), by said processing circuitry, a sliding friction ($\mu_{si}$) of the at least one wheel relative ground based on the first force and the first torque.

15. A non-transitory computer-readable storage medium comprising instructions which, when executed by the processing circuitry, cause the processing circuitry to perform the method of claim 14.

**Amended claims in accordance with Rule 137(2) EPC.**

1. A computer system (400) comprising processing circuitry (410) configured to:

   i) control a pressing of at least one part (110) of a vehicle or machine (100) against ground (120) with a first force (116, $F_b$), wherein the at least one part is any one of a bucket (110), dozer blade, ripper, plow blade, grader blade, plane, surface finishing attachment, and hopper;
   ii) with the at least one part being pressed against ground with the first force, increase a torque (136, 137, $\tau_i$) applied to at least one wheel (130, 131) of the vehicle or machine, and determine a first torque ($\tilde{\tau}_i$) as the applied torque required to make the at least one wheel, or a track of the vehicle or machine driven by the at least one wheel, start spinning;
   iii) estimate a sliding friction ($\mu_{si}$) of the at least one wheel, or of the track, relative to ground based on the first force and the first torque.

2. The system of claim 1, wherein the processing circuitry is configured to estimate the sliding friction as a ratio of the first torque to a product of a normal load and tire or wheel radius of the at least one wheel ($\mu_{si} \propto \tilde{\tau}_i(F_{zi}r_i)$).

3. The system of claim 1 or 2, wherein the processing circuitry is further configured to, in response to the at least one wheel starting to spin, reduce or remove the torque applied to the at least one wheel.

4. The system of any one of the preceding claims, wherein the processing circuitry is further configured to obtain an indication of a ground surface type, and to estimate peak friction ($\mu_{pi}$) based on the estimated sliding friction and ground surface type using a lookup table.

5. The system of any one of the preceding claims, wherein the indication of the ground surface type is obtained based on one or more images of the ground captured by one or more cameras (160, 162) of the vehicle or machine.

6. The system of any of the preceding claims, wherein the processing circuitry is further configured to use the pressing of the at least one part to reduce a normal load ($F_{zi}$) of the at least one wheel.

7. The system of any one of the preceding claims, wherein the processing circuitry is further configured to obtain a friction probe request (180) from a driver or system of the vehicle or machine, and to perform operations i), ii) and iii) in response to receiving said request.

8. The system of any one of the preceding claims, wherein the processing circuitry is further configured to perform operation iii) in response to determining that operation i) or operations i) and ii) is/are already performed as part of another operation of the vehicle or machine.

9. The system of any one of the preceding claims, wherein the processing circuitry is further configured to perform operation i) in response to obtaining a signal (162) indicating that the vehicle or machine is standing still.

10. The system of claim 9, wherein the signal indicating that the vehicle or machine is standing still is obtained from at least one radar (160) of the vehicle or machine.

11. A vehicle or machine (100) comprising the computer system of any of claims 1-10 and the at least one part.

12. The vehicle or machine of claim 11, wherein the vehicle or machine is a wheel loader and the at least one part is a bucket (110).

13. The vehicle or machine of claim 11, wherein the vehicle or machine is any one of a bulldozer, grader, planer, plow, tractor, excavator, and groomer.

14. A computer-implemented method (300), comprising:

   i) controlling (S310, S320), by processing circuitry (410) of a computer system (400), a pressing of at least one part (110) of a vehicle or machine (100) against ground (120) with a first force ($F_b$), wherein the at least one part is any one of a bucket (110), dozer blade, ripper, plow blade, grader blade, plane, surface finishing attachment, and hopper;
   ii) with the at least one part being pressed against ground with the first force, increasing (S330), by said processing circuitry, a torque ($\tau_i$) applied to at least one wheel (130, 131) of the vehicle or machine, and determining (S340) a first torque $(\tilde{\tau}_i)$ as the applied torque required to make the at least one wheel start spinning;

iii) estimating (S350), by said processing circuitry, a sliding friction $(\mu_{si})$ of the at least one wheel relative ground based on the first force and the first torque.

15. A non-transitory computer-readable storage medium comprising instructions which, when executed by the processing circuitry, cause the processing circuitry to perform the method of claim 14.

**Fig. 1**

**Fig. 2A**

**Fig. 2B**

Fig. 2C

Fig. 2D

Fig. 3

**Fig. 4**

**Fig. 5**

**Fig. 6**

**EUROPEAN SEARCH REPORT**

Application Number

EP 24 18 2884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 406 486 A (KAMIO SHIGERU [JP] ET AL) 11 April 1995 (1995-04-11) | 1-4,6-9, 11,14,15 | INV. B60T8/172 |
| Y | * figures 3,6,7,18 * | 4,5,9, 10,12,13 | B60W40/068 |
| Y | EP 3 578 432 A1 (SEOUL NAT UNIV R&DB FOUNDATION [KR]) 11 December 2019 (2019-12-11) * paragraph [0068] - paragraph [0073] * * paragraph [0076] - paragraph [0079] * * figures 1,3,5 * | 4 | |
| Y | US 2021/170870 A1 (OH JI WON [KR] ET AL) 10 June 2021 (2021-06-10) * paragraph [0018] * | 5 | |
| Y | US 2022/349155 A1 (MAIYUR SUDARSHAN A [US] ET AL) 3 November 2022 (2022-11-03) * paragraphs [0022], [0030] - [0033] * * figure 1 * | 12,13 | |
| Y | US 2006/211535 A1 (CASEY KENT A [US]) 21 September 2006 (2006-09-21) * paragraphs [0026], [0036] * | 9,10,12, 13 | TECHNICAL FIELDS SEARCHED (IPC) B60T B60W |

The present search report has been drawn up for all claims

| Place of search | Date of completion of the search | Examiner |
|---|---|---|
| Munich | 13 November 2024 | Colonna, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 2884

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2024

| Patent document cited in search report | | Publication date | Patent family member(s) | | Publication date |
|---|---|---|---|---|---|
| US 5406486 | A | 11-04-1995 | JP | H06122332 A | 06-05-1994 |
| | | | US | 5406486 A | 11-04-1995 |
| EP 3578432 | A1 | 11-12-2019 | CN | 110382326 A | 25-10-2019 |
| | | | EP | 3578432 A1 | 11-12-2019 |
| | | | KR | 20180091329 A | 16-08-2018 |
| | | | US | 2020023852 A1 | 23-01-2020 |
| | | | WO | 2018143759 A1 | 09-08-2018 |
| US 2021170870 | A1 | 10-06-2021 | KR | 20210071132 A | 16-06-2021 |
| | | | US | 2021170870 A1 | 10-06-2021 |
| US 2022349155 | A1 | 03-11-2022 | CN | 117241979 A | 15-12-2023 |
| | | | EP | 4330100 A1 | 06-03-2024 |
| | | | US | 2022349155 A1 | 03-11-2022 |
| | | | WO | 2022231731 A1 | 03-11-2022 |
| US 2006211535 | A1 | 21-09-2006 | DE | 102006007466 A1 | 28-09-2006 |
| | | | US | 2006211535 A1 | 21-09-2006 |

EPO FORM P0459

For more details about this annex : see Official Journal of the European Patent Office, No. 12/82